Europäisches Patentamt

European Patent Office

Office européen des brevets

(11) Publication number : **0 514 003 A2**

(12) **EUROPEAN PATENT APPLICATION**

(21) Application number : 92303306.2

(22) Date of filing : 14.04.92

(51) Int. Cl.⁵ : **B60N 2/26**

(30) Priority : **16.04.91 GB 9108035**

(43) Date of publication of application :
**19.11.92 Bulletin 92/47**

(84) Designated Contracting States :
**DE ES FR GB IT NL**

(71) Applicant : **BRITAX RÖMER Kindersicherheit GmbH
Blaubeurer Strasse 71 Postfach 3449
W-7900 Ulm/Donau (DE)**

(71) Applicant : **Volkswagen AG
W-3180 Wolfsburg 1 (DE)**

(72) Inventor : **Czernakowski, Waldemar
Ferdinand-Sauerbruch Strasse 3
W-7606 Blaustein 1 (DE)**
Inventor : **Wetter, Hermann
Alpenstrasse 60
W-7900 Ulm (DE)**

Inventor : **Staats, Klaus Rudiger
Forsthausweg 3a
W-3180 Wolfsburg 26 (DE)**
Inventor : **Kochy, Horst
Berliner Ring 21
W-3170 Gifhorn (DE)**
Inventor : **Laumann, Peter
Dorfstrasse 80
W-3181 Ehra-Lessien (DE)**
Inventor : **Kuhn, Detlef
Eisenbutteler Strasse 19
W-3300 Braunschweig (DE)**
Inventor : **Lau, Robert
Wilshoop 15
W-3180 Wolfsburg-Ehmen (DE)**
Inventor : **Hurrelbrink, Erhard
Gebrüder-Grimm-Strasse 28A
W-3306 Lehre Fletchdorf (DE)**
Inventor : **Westfal, Udo
Kreuzkamp 7
W-3177 Sassenburg 5 (DE)**

(74) Representative : **Hollinghurst, Antony
B.S.G. International plc Patent Department
Castle Trading Estate East Street
Portchester, Hampshire PO16 9SD (GB)**

(54) **Child's safety seat.**

(57)    A child safety seat for use in a motor vehicle has a seat shell (40) moulded from a rigid plastics material and a liner which includes a rubberised hair mat (54). Several vents (50, 52) are formed in the seat shell (40) behind the mat (54).

Fig.4.

EP 0 514 003 A2

This invention relates to a child safety seat for use in a motor vehicle of the type having a seat shell moulded from a rigid plastics material and having a liner which includes a resilient pad.

Known seats of this type commonly have a synthetic foam pad formed, for example, from polyurethane. Such seats have the disadvantage that they can be become uncomfortable particularly during hot weather and on long journeys due to the poor dissipation of heat and water vapour. The former causes excessive perspiration by the seat occupant and the latter impedes dispersion of such perspiration.

E. Faust and K-H. Umbach, "Der Klimatische Sitzkomfort in Fahrzeugsitzen", Automobiltechnische Zeitschrift 86 (1984) 3, pages 99-102 and 86 (1984) 9, pages 399-405, discloses an adult motor vehicle seat in which the conventional synthetic foam pad between the seat cover and the steel wire seat springs is replaced by a pad formed from rubberised hair. Such a seat has been found to be considerably more comfortable due to increased heat transmission and water vapour diffusion.

According to the invention, in a child safety seat of the type described above, the pad comprises a rubberised hair mat, a plurality of vents being formed in the seat shell behind the mat.

Preferably, the rubberised hair mat is about 15mm thick.

The vents may comprise grooves in the seat shell. Alternatively, the vents may comprise holes extending through the seat shell.

In a preferred form of the invention, the rubberised hair mat is covered by an outer cover comprising fabric with a polyester fleece backing.

Embodiments of the invention will now be described, by way of example, will reference to the accompanying drawings in which:

Figure 1 is a perspective view of the rigid shell of a seat in accordance with a first embodiment of the invention;

Figure 2 is a vertical cross-sectional view of a seat having a shell as shown in Figure 1;

Figure 3 is a perspective view of a shell of a seat in accordance with a second embodiment of the invention;

Figure 4 is a vertical cross-sectional view of a seat having a shell as shown in Figure 3.

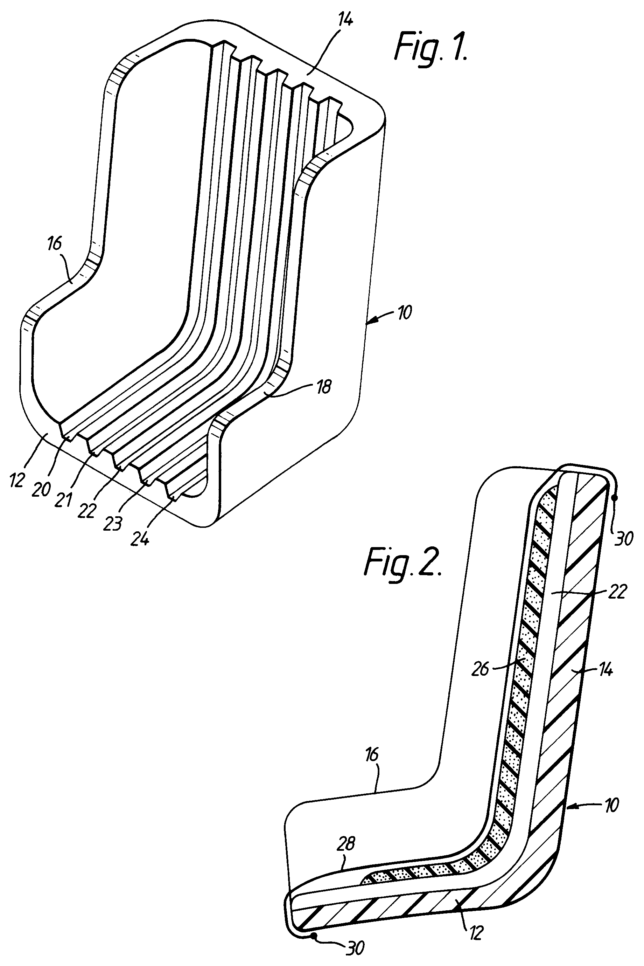

Figure 1 shows a shell 10 of a child's safety seat moulded from a rigid plastics material such as polyurethane. The shell 10 has a seat portion 12, a backrest portion 14 and two side portions 16 and 18.

In accordance with the invention, five grooves 20 to 24 are formed in the inner surface of the seat shell 10 so as to extend parallel to one another from the front edge of the seat portion 12 to the upper edge of the backrest portion 14.

Figure 2 a rubberised hair mat 26 is located on the inner surface of the seat shell 10 so as to extend from the upper edge of the backrest 14 down and approximately two thirds of the way forwards across the bottom of the seat portion 12. The mat 26 is arranged to bridge the grooves 20 to 24.

The seat is covered by a stretch fabric cover 28 which extends over the whole of the front or inner side of the seat shell 10 and is secured in position by elastic cord 30 which is sewn into its periphery. The fabric cover 28 preferably has a backing of polyester fleece to absorb rough surface inequalities on the exposed surface of the rubberised hair mat 26.

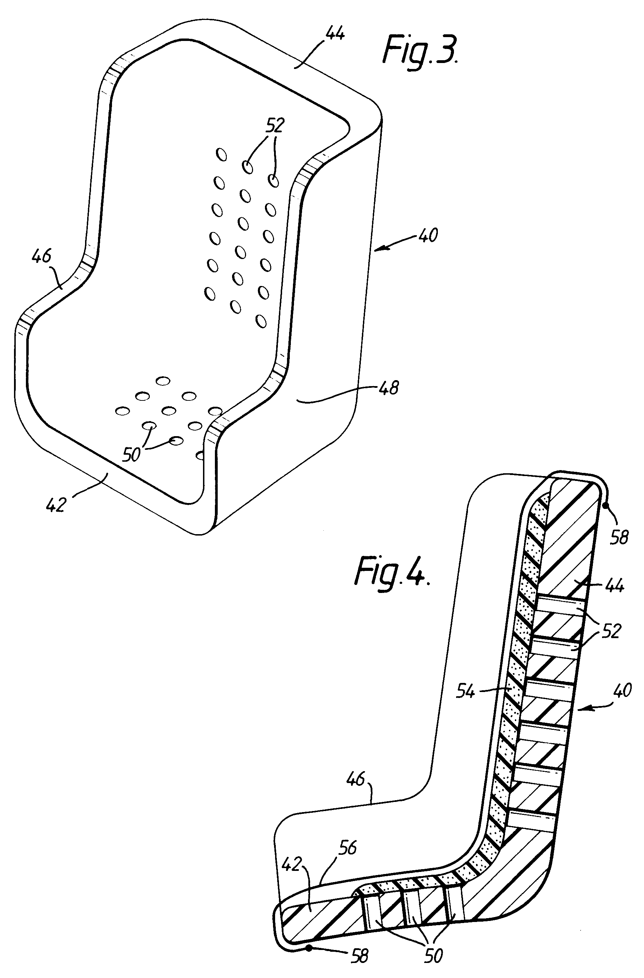

Figure 3 shows an alternative seat shell 40 which also is moulded from a rigid plastics material such as polyurethane. It has a seat portion 42, a backrest portion 44 and side portions 46 and 48. An array of holes 50 extend through the seat portion 42 and a similar array of holes 52 extend through the backrest portion 44.

Referring to Figure 4, the shell 40 has a rubberised hair mat 54 of similar extent to the mat 26 of Figure 2. As can be seen from Figure 4, the mat covers all of the holes 50 in the seat portion 42. The seat is also provided with a stretch fabric outer cover 56 which is identical to the cover 28 Figures 1 and 2 and which has elastic cord 58 sewn into its periphery.

## Claims

1. A child safety seat for use in a motor vehicle having a seat shell (10, 40) moulded from a rigid plastics material and having a liner which includes a resilient pad, characterised in that the pad comprises a rubberised hair mat (26, 54), a plurality of vents (20-24, 50, 52) being formed in the seat shell (10, 40) behind the mat (26, 54).

2. A child safety seat according to claim 1, wherein the rubberised hair mat (26, 54) is about 15mm thick.

3. A child safety seat according to claim 1 or 2, wherein the vents comprise grooves in the seat shell (10).

4. A child safety seat according to claim 1 or 2, wherein the vents comprise holes (50, 52) extending through in the seat shell (40).

5. A child safety seat according to claim 1, wherein the rubberised hair mat (26, 54) is covered by an outer cover (28, 56) comprising fabric with a polyester fleece backing.

*Fig.1.*

*Fig.2.*

*Fig.3.*

*Fig.4.*